# EUROPEAN PATENT SPECIFICATION

(11) **EP 3 527 119 B1**
(45) Date of publication and mention of the grant of the patent: **17.08.2022**
(21) Application number: 19382124.6
(22) Date of filing: 20.02.2019
(51) Int. Cl.: A47L 13/16, A01N 59/20, D06M 11/83

(54) **IMPROVED TEXTILE PRODUCT FOR CLEANING**
VERBESSERTES TEXTILPRODUKT ZUR REINIGUNG
PRODUIT TEXTILE AMÉLIORÉ POUR LE NETTOYAGE

(30) Priority: 20.02.2018 ES 201830227 U
(43) Date of publication of application: 21.08.2019
(73) Proprietor: Pastor Fita, Juan Emilio, 46890 Agullent (ES)
(72) Inventor: Pastor Fita, Juan Emilio, 46890 Agullent (ES)
(74) Representative: Isern Patentes y Marcas S.L.

(56) References cited:
- EP-A1- 1 272 037
- ES-A1- 2 378 799
- JP-A- H10 117 999

## Description

### OBJECT OF THE INVENTION

The objective of the present application for invention is the registration of an improved textile product for cleaning which incorporates considerable innovations and advantages over the techniques used up until now.

More specifically, the invention proposes the development of an improved textile product for cleaning which, due to its particular arrangement, allows use thereof for making cleaning articles, such as cleaning cloths or strips for mops, among others, improving its cleaning performance as well as optimizing manufacturing costs and processes.

### BACKGROUND OF THE INVENTION

Different products used for making cleaning articles, such as cleaning cloths or strips for mops, among others, are known in the current state of the art.

Such known products are constantly being innovated both because of the emergence of new materials that improve the properties of the obtained products, and because of the optimization of manufacturing processes, as well as the contribution of global product improvements.

In this sense, said products have antibacterial and antiviral features, but they are the result of expensive productive processes which make them substantially less affordable for consumers, who want effective but at the same time reasonably priced products.

At prior art, for example, it is known the document JPH10117999A, who discloses an underlay formed from threads of a chemical fiber such as tetron, natural fiber such as cotton, etc., and a flat textile prepared by using these threads as warps or wefts or by knitting them. The obtained flat textile is used as the underlay. Synthetic thread is formed from synthesizing a thread made of a material containing a good quantity of water such as cotton and a flat wire of metal (lamella thread) prepared by evaporating a metal such as aluminum onto the surface of a film tape of a soft synthetic resin such as nylon and providing a metal film on the surface so that a single piece of thread is accomplished.

The present invention helps to solve and overcome the present problem, as it allows use thereof for making cleaning articles, such as cleaning cloths or strips for mops, among others, improving their cleaning performance and antibacterial and antiviral properties, as well as optimizing manufacturing costs and processes.

### DESCRIPTION OF THE INVENTION

The present invention has been developed for the purpose of providing an improved textile product for cleaning, essentially characterized by the fact that it comprises a first thread of natural or synthetic microfiber and a second thread of natural or synthetic microfiber, the second thread being enriched with particles of at least one transition metal.

Preferably, in the improved textile product for cleaning, the transition metal of the particles is copper or copper alloy.

Additionally, in the improved textile product for cleaning, its resulting global composition is distributed approximately 50/50 between the first thread and the second thread.

Alternatively, in the improved textile product for cleaning, the first thread is of bamboo or the like.

As a result of the present invention, an improved textile product for cleaning which allows use thereof for making cleaning articles, such as cleaning cloths or strips for mops, among others, is achieved, improving their cleaning performance and antibacterial and antiviral properties, as well as optimizing manufacturing costs and processes.

Other features and advantages of the improved textile product for cleaning will become apparent from the description of a preferred but not exclusive embodiment illustrated by way of non-limiting example in the attached drawings, in which:

### BRIEF DESCRIPTION OF THE DRAWINGS

Figure 1 is a schematic view of the separate threads of a preferred embodiment of the improved textile product for cleaning of the present invention.
Figure 2 is a schematic view indicating the woven threads of a preferred embodiment of the improved textile product for cleaning of the present invention.

### DESCRIPTION OF A PREFERRED EMBODIMENT

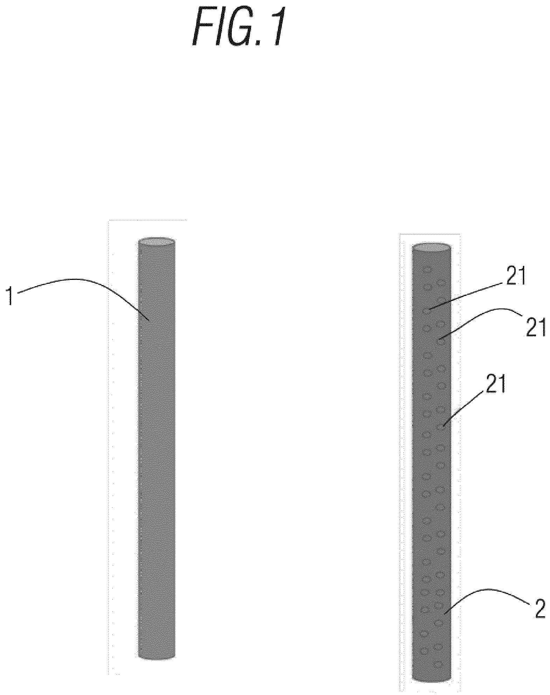

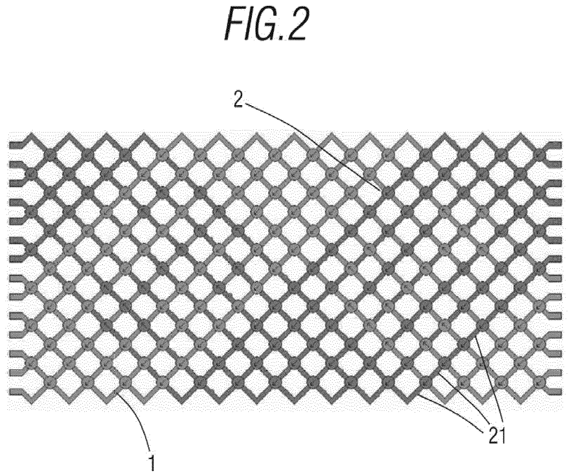

As schematically shown in Figures 1 and 2, the improved textile product for cleaning of the present invention comprises a first thread 1 of natural or synthetic microfiber and a second thread 2 of natural or synthetic microfiber.

Furthermore, the second thread 2 is enriched with particles 21 of at least one transition metal.

The presence of these metallic particles 21 has a very specific purpose, since these elements have properties which substantially improve the global behavior of the improved textile product for cleaning of the present invention.

More specifically, the incorporation of the particles 21 of a transition metal on the second thread 2, first of all, provides important antibacterial and antiviral properties to the improved textile product for cleaning of the present invention, improving its overall features.

The constitution of the particles 21 is very stable and, therefore, scarcely vulnerable, and it has good mechanical properties, so they withstand the possible abrasion to which the surface of the improved textile product for cleaning of the present invention is subjected on different surfaces, whereby not reducing their antibacterial and antiviral properties.

In a preferred embodiment of the improved textile product for cleaning of the invention, the transition metal of the particles 21 is copper or copper alloy.

This metal is widely used in the industry for a wide range of applications, so costs for obtaining, producing and treating same are substantially lower compared with other transition metals which could also provide the same antibacterial and antiviral properties sought with the present invention, such as silver or gold, among others.

Additionally, the copper can be presented in compounds such as copper oxides, which are also stable and commonly used in the industry, easy to handle as well as
be embedded in a thread of either a natural or synthetic microfiber, to obtain the arrangement of the present invention.

To achieve better features in the improved textile product for cleaning of the proposed invention, its resulting global composition is distributed approximately 50/50 between the first thread 1 and the second thread 2, as seen in Figure 2, and exhibiting on its entire surface, therefore, the antibacterial and antiviral properties that are sought, and without reducing its cleaning and absorbing effectiveness.

Additionally, the first thread 1 can be of bamboo or the like. In this case, the incorporation of the bamboo as an additional microfiber also augments the antibacterial and antiviral properties due to its nature.

The improved textile product for cleaning of the present invention can be used for manufacturing cleaning cloths, mops, strips for mops, among other products for cleaning, in which the aforementioned biocidal properties will be provided.

## Claims

1. An improved textile product for cleaning, that it comprises a first thread (1) of natural or synthetic microfiber and a second thread (2), **characterized by** the fact of the second thread (2) is made of natural or synthetic microfiber and enriched with particles (21) of at least one transition metal.

2. The improved textile product for cleaning according to claim 1, **characterized by** the fact that the transition metal of the particles (21) is copper or copper alloy.

3. The improved textile product for cleaning according to any of the preceding claims, **characterized by** the fact that its resulting global composition is distributed approximately 50/50 between the first thread (1) and the second thread (2).

4. The improved textile product for cleaning according to any of the preceding claims, **characterized by** the fact that the first thread (1) is of bamboo or the like.

## Patentansprüche

1. Verbessertes Textilprodukt zur Reinigung, dass es einen ersten Faden (1) aus natürlicher oder synthetischer Mikrofaser und einen zweiten Faden (2) umfasst, **dadurch gekennzeichnet, dass** der zweite Faden (2) aus natürlicher oder synthetischer Mikrofaser besteht und mit Partikeln (21) mindestens eines Übergangsmetalls angereichert ist.

2. Verbessertes Textilprodukt zur Reinigung nach Anspruch 1, **dadurch gekennzeichnet, dass** das Übergangsmetall der Partikel (21) Kupfer oder eine Kupferlegierung ist.

3. Verbessertes Textilprodukt zur Reinigung nach einem der vorhergehenden Ansprüche, **dadurch gekennzeichnet, dass** seine resultierende globale Zusammensetzung ungefähr 50/50 zwischen dem ersten Faden (1) und dem zweiten Faden (2) verteilt ist.

4. Verbessertes Textilprodukt zur Reinigung nach einem der vorhergehenden Ansprüche, **dadurch gekennzeichnet, dass** der erste Faden (1) aus Bambus oder dergleichen besteht.

## Revendications

1. Produit textile amélioré pour le nettoyage, qui comprend un premier fil (1) en microfibre naturelle ou synthétique et un second fil (2), **caractérisé par le fait que** le second fil (2) est en microfibre naturelle ou synthétique et enrichi avec des particules (21) d'au moins un métal de transition.

2. Produit textile amélioré pour le nettoyage selon la revendication 1, **caractérisé par le fait que** le métal de transition des particules (21) est du cuivre ou un alliage de cuivre.

3. Produit textile amélioré pour le nettoyage selon l'une quelconque des revendications précédentes, **caractérisé par le fait que** sa composition globale résultante est répartie environ 50/50 entre le premier fil (1) et le second fil (2).

4. Produit textile amélioré pour le nettoyage selon l'une quelconque des revendications précédentes, **caractérisé par le fait que** le premier fil (1) est en bambou ou analogue.
